# EUROPÄISCHE PATENTANMELDUNG

(11) **EP 1 025 949 A2**
(43) Veröffentlichungstag der Anmeldung: **09.08.2000**
(21) Anmeldenummer: 00100442.3
(22) Anmeldetag: 10.01.2000
(51) Int. Cl.: B23K 37/00

(54) **Thermisches Schneiden oder Schweissen mit Verschleissschutz**

(30) Priorität: 08.01.1999 DE 19900477
(71) Anmelder: Linde Technische Gase GmbH, 82049 Höllriegelskreuth (DE)
(72) Erfinder: Herrmann, Johann, 85716 Unterschleissheim (DE)
(74) Vertreter: Obermüller, Bernhard

(57) **Zusammenfassung**

Die Erfindung betrifft eine Vorrichtung und ein Verfahren zum thermischen Schneiden oder Schweißen, insbesondere eine Vorrichtung und ein Verfahren zur thermischen Materialbearbeitung unter Einsatz eines Lasers. Erfindungsgemäß umfaßt die Vorrichtung zumindest teilweise im Bereich der dem zu bearbeitendem Werkstück zugewandten Seite eine mittels eines thermischen Spritzverfahrens aufgebrachte Beschichtung. Insbesondere wird vorgeschlagen, daß Düsen zur Zufuhr zumindest eines Gasstromes gegen die Werkstückoberfläche zumindest teilweise im Bereich der dem zu bearbeitendem Werkstück zugewandten Seite eine mittels eines thermischen Spritzverfahrens aufgebrachte Beschichtung umfassen.

## Beschreibung

Die Erfindung betrifft eine Vorrichtung zum thermischen Schneiden oder Schweißen, sowie ein Verfahren zum thermischen Schneiden oder Schweißen.

Zu den relevanten Verfahren der thermischen Materialbearbeitung von Werkstücken gehören einerseits thermische Schneidverfahren und andererseits Schweißverfahren. Innerhalb der thermischen Bearbeitungsverfahren nimmt die Lasermaterialbearbeitung, d.h. die thermische Materialbearbeitung unter Einsatz eines Lasers, eine Sonderstellung ein, wobei ein fokussierter Laserstrahl auf die zu bearbeitende Werkstückoberfläche geführt wird. Die Erfindung wird daher im folgenden vor allem anhand der Lasermaterialbearbeitung näher betrachtet.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Als Laserbearbeitungsverfahren sind vor allem das Laserstrahlschneiden, das Laserstrahlschweißen und Verfahren der Laserstrahloberflächenbehandlung bekannt. Beim Laserstrahlschneiden wird zwischen drei Verfahrensvarianten unterschieden, dem Laserstrahlbrennschneiden, dem Laserstrahlschmelzschneiden und dem Laserstrahlsublimierschneiden. Bei den Verfahren der Laserstrahloberflächenbehandlung umfassen vor allem das Laserstrahlhärten, das Laserstrahlumschmelzen, das Laserstrahllegieren, das Laserstrahlbeschichten und das Laserstrahlbohren. Die Verfahren der Laserstrahloberflächenbehandlung finden in der Regel dort Verwendung, wo konventionelle Oberflächenverfahren nicht oder nur mit großen Nachteilen eingesetzt werden können.

Bei den aufgezählten Verfahren wird durch die hohe Energie des Laserstrahls Material des zu bearbeitenden Werkstücks erhitzt, aufgeschmolzen oder verdampft. Bei der Lasermaterialbearbeitung kommen häufig Schutz- und/oder Prozeßgase bzw. Arbeitsgase zum Einsatz. Je nach Verfahren und zu bearbeitendem Material können die eingesetzten Gase unterschiedliche Aufgaben zu erfüllen haben. So bewirkt beispielsweise der Einsatz eines harten Gasstrahls einen Laserschnitt, bei Abdeckung durch Schutzgas kann eine Schweißnaht, eine Härtespur, eine Spur um geschmolzenes Material, eine Beschriftung, eine Gravur oder dergleichen erzeugt werden. Bei vielen Verfahren der Lasermaterialbearbeitung wird metallisches und/oder sonstiges Material auf hohe Temperaturen erhitzt, bei denen auf der einen Seite eine Reaktion mit den einhüllenden Gasen stattfindet kann. In vielen Fällen werden dazu technische Gase eingesetzt, um diese Materialberarbeitungsprozesse effektiver, schneller und/oder mit verbesserter Qualität durchführen zu können. Die Gase werden üblicherweise durch eine Düse zugeführt.

Auf der anderen Seite kommt es bei der Materialbearbeitung immer wieder zu Materialauswurf. Dieser tritt insbesondere bei Prozeßstörungen auf.

Bei vielen Bearbeitungsverfahren bzw. Laserbearbeitungsverfahren und dabei hauptsächlich beim Laserschneiden und Laserschweißen kommen Bearbeitungsköpfen bzw. Laserbearbeitungsköpfe mit Bestandteilen, insbesondere Düsen, aus verhältnismäßig leicht spanend zu verarbeitenden Materialien wie beispielsweise Kupfer oder Messing zum Einsatz. Diese Bestandteile bzw. Düsen erlauben eine im Vergleich zu Vorrichtungen bzw. Düsen aus Keramik deutlich einfachere Herstellung.

Allerdings führt die Verwendung von verhältnismäßig leicht spanend zu verarbeitenden Materialien auch zu einem Nachteil. Viele zu schneidende oder zu schweißende Werkstücke besitzen einen wesentlich höheren Schmelzpunkt als diese Materialien. Gelangt daher Materialauswurf vom bearbeiteten Werkstück beispielsweise auf eine Düse aus einem solchen Material wie etwa Kupfer oder Messing, reicht die vom auftreffenden Material auf die Düse übergehende Wärmemenge aus, die Düse teilweise aufzuschmelzen oder sogar teilweise wegzubrennen. Ein irreparabler Schaden an der Düse ist die Folge, was ein Ersetzen oder Austauschen erforderlich macht und außerdem die Standzeiten vermindert.

Eine denkbare und an sich bekannte Kühlung der betroffenen Bearbeitungskopfteile bzw. der Düsen löst das Problem nicht in zufriedenstellendem Maße. Ferner ist diese Maßnahme auch relativ aufwendig.

Der vorliegenden Erfindung liegt daher die Aufgabe zugrunde, eine Vorrichtung und ein Verfahren der eingangs genannten Art aufzuzeigen und weiter zu verbessern, bei welchen einerseits verhältnismäßig leicht spanend zu verarbeitenden Materialien als Grundwerkstoffe Verwendung finden können, aber andererseits die Anfälligkeit für Beschädigungen durch auftreffendes Material mit hoher Temperatur verringert werden kann. Es sollten ferner höhere Standzeiten und damit geringere Betriebskosten erreicht werden.

Die gestellte Aufgabe wird dadurch gelöst, daß die Vorrichtung zumindest teilweise im Bereich der dem zu bearbeitendem Werkstück zugewandten Seite eine mittels eines thermischen Spritzverfahrens aufgebrachte Beschichtung umfaßt.

Der Vorteil der Erfindung liegt darin, daß durch die Herstellung der Beschichtung unter Anwendung eines thermischen Spritzverfahrens eine optimale Anpassung der Eigenschaften und insbesondere des Verschleißschutzes vorzusehen. Auf der dem Bearbeitungsprozeß zugewandten und damit dem Auftreffen Materialteilchen hoher Temperatur ausgesetzten Fläche oder Flächen können mittels thermischer Spritzverfahren hergestellte Beschichtungen aufgetragen werden, deren Schmelztemperatur sehr hoch ist.

Thermische Spritzverfahren bieten die Möglichkeiten der Herstellung von Beschichtungen aus den unterschiedlichsten Materialien, wobei die thermischen Spritzverfahren Schichtzusammensetzungen ermöglichen, die andere Herstellungsverfahren von Beschichtungen nicht zulassen.

Thermische Spritzverfahren zeichnen sich im wesentlichen dadurch aus, daß sie gleichmäßig aufgetragene Beschichtungen von hoher Qualität und Güte ermöglichen. Durch thermische Spritzverfahren aufgetragene Beschichtungen können durch Variation der Spritzmaterialien und/oder der Verfahrensparameter an unterschiedliche Anforderungen angepaßt werden. Die Spritzmaterialien (Spritzzusatzwerkstoffe) können dabei in Form von Drähten, Stäben oder als Pulver verarbeitet werden. Es kann zusätzlich eine Nachbehandlung vorgesehen sein.

Das thermische Spritzen zum Beschichten kennt als Verfahrensvarianten grundsätzlich das autogene Flammspritzen oder das Hochgeschwindigkeits-Flammspritzen, das Lichtbogenspritzen, das Plasmaspritzen, das Detonationsspritzen und das Laserspritzen.

Thermische Spritzverfahren werden in allgemeiner Form beispielsweise in
- *Übersicht und Einführung in das "Thermische Spritzen",* Peter Heinrich, Linde-Berichte aus Technik und Wissenschaft, 52/1982, Seiten 29 bis 37,
   oder
- *Thermisches Spritzen - Fakten und Stand der Technik,* Peter Heinrich, Jahrbuch Oberflächentechnik 1992, Band 48, 1991, Seiten 304 bis 327, Metall-Verlag GmbH,
beschrieben.

Weitere Details zum thermischen Spritzen sind beispielsweise der europäischen Norm EN 657 zu entnehmen.

In jüngerer Zeit wurde darüber hinaus ein weiteres thermisches Spritzverfahren entwickelt, welches auch als Kaltgasspritzen bezeichnet wird. Es handelt sich dabei um eine Art Weiterentwicklung des Hochgeschwindigkeits-Flammspritzens. Dieses Verfahren ist beispielsweise in der europäischen Patentschrift EP 0 484 533 B1 beschrieben. Beim Kaltgasspritzen kommt ein Zusatzwerkstoff in Pulverform, zum Einsatz. Die Pulverpartikel werden beim Kaltgasspritzen jedoch nicht im Gasstrahl geschmolzen. Vielmehr liegt die Temperatur des Gasstrahles unterhalb des Schmelzpunktes der Zusatzwerkstoffpulverpartikel (EP 0 484 533 B1). Im Kaltgasspritzverfahren wird also ein im Vergleich zu den herkömmlichen Spritzverfahren "kaltes" bzw. ein vergleichsweise kälteres Gas verwendet. Gleichwohl wird das Gas aber ebenso wie in den herkömmlichen Verfahren erwärmt, aber in der Regel lediglich auf Temperaturen unterhalb des Schmelzpunktes der Pulverpartikel des Zusatzwerkstoffes.

Je nach dem verwendeten thermischen Spritzverfahren und/oder dem eingesetzten Spritzzusatzwerkstoff ergibt sich eine Beschichtung mit bestimmten Eigenschaften. Die Wahl kann dabei insbesondere im Hinblick auf eine möglichst hohe Schmelztemperatur und gegebenenfalls auch zusätzlich auf eine möglichst hohe Wärmekapazität der Beschichtung erfolgen. Eine gute mechanische Bearbeitbarkeit der Beschichtung ist ebenfalls vorteilhaft, da beispielsweise Düsenbohrungen im Bedarfsfall nach dem Beschichten nachgearbeitet werden können.

Gute Ergebnisse konnten erzielt werden, wenn die Beschichtung mittels eines Flammspritzverfahrens und insbesondere mittels des Hochgeschwindigkeits-Flammspritzverfahrens oder mittels des Kaltgasspritzverfahrens aufgebracht wird. Als Hochgeschwindigkeits-Flammspritzverfahren können das Hochgeschwindigkeits-Flammspritzen der ersten Generation mit Spritzpartikelgeschwindigkeiten bis 350 m/s, das Hochgeschwindigkeits-Flammspritzen der zweiten Generation mit Spritzpartikelgeschwindigkeiten zwischen 350 und 650 m/s und bevorzugt das Hochgeschwindigkeits-Flammspritzen der dritten Generation mit Spritzpartikelgeschwindigkeiten über 650 m/s zum Einsatz kommen. Beim Kaltgasspritzen können die Pulverpartikel auf eine Geschwindigkeit von 300 bis 1600 m/s beschleunigt werden. Es eignen sich dabei insbesondere Geschwindigkeiten der Pulverpartikel zwischen 1000 und 1600 m/s, besonders bevorzugt zwischen 1250 und 1600 m/s, da in diesem Fall die Energieübertragung in Form von kinetischer Energie besonders hoch ausfällt.

Für die Beschichtung mittels thermischen Spritzens können als Spritzmaterialien insbesondere Metalle, Metallegierungen, Oxide (insbesondere Metalloxide), Carbide, Boride oder Mischungen der vorgenannten Stoffe verwendet werden.

Bei der Beschichtung mittels pulverförmigem Spritzzusatzwerkstoff eignen sich insbesondere Pulver mit Partikelgrößen von 1 µm bis 1 mm, besonders bevorzugt mit 5 bis 100 µm.

Als Gase für das thermische Spritzen kommen beispielsweise Stickstoff, Helium, Argon, Neon, Krypton, Xenon, ein Wasserstoff enthaltendes Gas, ein kohlenstoffhaltiges Gas, insbesondere Kohlendioxid, Sauerstoff, ein Sauerstoff enthaltendes Gas, Luft oder Mischungen der vorgenannten Gase in Frage. Neben den aus der EP 0 484 533 B1 bekannten Gasen Luft und/oder Helium eignen sich auch für das den pulverförmigen Zusatzwerkstoff tragende Gas ein Stickstoff, Argon, Neon, Krypton, Xenon, Sauerstoff, ein Wasserstoff enthaltendes Gas, ein kohlenstoffhaltiges Gas, insbesondere Kohlendioxid, oder Mischungen der vorgenannten Gase und Mischungen dieser Gase mit Helium. Der Anteil des Helium am Gesamtgas kann bis zu 90 Vol.-% betragen. Bevorzugt wird ein Hellumanteil von 10 bis 50 Vol.-% im Gasgemisch eingehalten.

Es hat sich gezeigt, daß durch den Einsatz dieser unterschiedlichen Gase und Gasgemischen zum Beschleunigen und Tragen eines pulverförmigen Zusatzwerkstoffes bzw. Spritzmaterials die Flexibilität und Wirksamkeit des thermischen Spritzverfahrens beim Beschichten der Bearbeitungsvorrichtungen wesentlich vergrößert werden kann. Die so hergestellten Schichten haften sehr gut auf den verschiedensten Substratwerkstoffen. Die Beschichtungen sind von hoher Güte, weisen eine außerordentlich geringe Porosität auf und besitzen derartige Spritzoberflächen, daß sich in der Regel eine Nacharbeitung erübrigt. Die erwähnten Gase besitzen eine ausreichende Dichte und Schallgeschwindigkeit, um die erforderlichen hohen Geschwindigkeiten der Pulverpartikel insbesondere beim Kaltgasspritzen gewährleisten zu können. Das Gas kann dabei inerte und/oder reaktive Gase enthalten.

In praktischen Tests haben sich beispielsweise thermisch gespritzte Beschichtungen im Bereich der Düsenspitze hervorragend bewährt, deren Spritzbeschichtungen Keramik (also Metalloxide) enthielten. Die beschichteten Düsen wurden bei den Bearbeitungsprozessen nicht mehr beschädigt.

## Patentansprüche

1. Vorrichtung zum thermischen Schneiden oder Schweißen, **dadurch gekennzeichnet**, daß die Vorrichtung zumindest teilweise im Bereich der dem zu bearbeitendem Werkstück zugewandten Seite eine mittels eines thermischen Spritzverfahrens aufgebrachte Beschichtung umfaßt.

2. Vorrichtung nach Anspruch 1, dadurch gekennzeichnet, daß die Vorrichtung Mittel zum Führen eines fokussierten Laserstrahls auf die zu bearbeitende Werkstückoberfläche umfaßt.

3. Vorrichtung nach Anspruch 1 oder 2, dadurch gekennzeichnet, daß die Vorrichtung eine Düse zur Zufuhr zumindest eines Gasstromes gegen die Werkstückoberfläche umfaßt, welche zumindest teilweise im Bereich der dem zu bearbeitendem Werkstück zugewandten Seite eine mittels eines thermischen Spritzverfahrens aufgebrachte Beschichtung umfaßt.

4. Vorrichtung nach einem der Ansprüche 1 bis 3, dadurch gekennzeichnet, daß die Beschichtung eine mittels des eines Flammspritzverfahrens, insbesondere mittels des Hochgeschwindigkeits-Flammspritzverfahrens oder mittels des Kaltgasspritzverfahrens aufgebrachte Beschichtung ist.

5. Vorrichtung nach einem der Ansprüche 1 bis 4, dadurch gekennzeichnet, daß die Beschichtung Metalle, Metallegierungen, Oxide, Carbide, Boride oder Mischungen der vorgenannten Stoffe umfaßt.

6. Verfahren zum thermischen Schneiden oder Schweißen, **dadurch gekennzeichnet**, daß eine Vorrichtung eingesetzt wird, welche zumindest teilweise im Bereich der dem zu bearbeitendem Werkstück zugewandten Seite eine mittels eines thermischen Spritzverfahrens aufgebrachte Beschichtung umfaßt.

7. Verfahren nach Anspruch 6, dadurch gekennzeichnet, daß ein fokussierter Laserstrahl auf die zu bearbeitende Werkstückoberfläche geführt wird.

8. Verfahren nach Anspruch 6 oder 7, dadurch gekennzeichnet, daß zumindest ein Gasstrom über eine Düse gegen die Werkstückoberfläche geführt wird, wobei diese Düse zumindest teilweise im Bereich der dem zu bearbeitendem Werkstück zugewandten Seite eine mittels eines thermischen Spritzverfahrens aufgebrachte Beschichtung umfaßt.
